# FASCICULE DE BREVET EUROPEEN

(11) **EP 2 147 605 B1**
(45) Date de publication et mention de la délivrance du brevet: **13.08.2014**
(21) Numéro de dépôt: 09164740.4
(22) Date de dépôt: 07.07.2009
(51) Int. Cl.: A23L 3/02

(54) **Installation et procédé pour traiter en continu un produit consommable, notamment alimentaire**
Anlage und Verfahren zur kontinuierlichen Behandlung eines zum Verzehr bedingten Produkts, insbesondere eines Lebensmittelprodukts
Installation and method for continuous treatment of a consumable product, in particular food

(30) Priorité: 17.07.2008 FR 0854863
(43) Date de publication de la demande: 27.01.2010
(73) Titulaire: LABO Concept Nature, 21130 Villers Les Pots (FR)
(72) Inventeur: Beaufils, Philippe, 21130 Athee (FR)
(74) Mandataire: Novagraaf Technologies

(56) Documents cités:
- WO-A-02/066336
- FR-A- 2 852 921
- FR-A- 2 868 757
- FR-A- 2 872 140
- FR-A- 2 888 223
- FR-A- 2 905 934

## Description

La présente invention concerne de manière générale le traitement de produits consommables, notamment des produits alimentaires dans un emballage, comprenant l'introduction des produits dans leur emballage et leur chauffage par micro-ondes. L'installation permettant la mise en oeuvre d'un tel traitement est également concernée.

Par produits consommables, on entend au sens de la présente invention des produits tels que les légumes et les fruits, et notamment des légumes tels que le chou-fleur, le brocoli, la courgette, l'asperge, l'artichaut, le poireau, les haricots verts et les pommes de terre

Dans le cadre d'un traitement d'un produit de type alimentaire contenu dans un emballage, lequel traitement serait réalisé dans une enceinte de chauffage se présentant sous forme d'un tunnel équipé de générateurs de micro-ondes, la fermeture après-cuisson de l'emballage de cuissons peut être de façon connue réalisée de diverses manières :
- par exemple au moyen d'une valve thermofusible posée sur l'emballage qui, en se solidifiant redevient hermétique à une température inférieure à 100 °C ; ou
- au moyen d'un système mécanique de soudure thermique à l'intérieur de l'enceinte de chauffage ; ou encore
- par fermeture de l'emballage immédiatement après le chauffage.

Un procédé selon lequel la fermeture des emballages de cuisson est réalisée au moyen de valves présente toutefois l'inconvénient de limiter fortement la rapidité du traitement, car ces valves ne peuvent pas supporter un dégazage trop important de la vapeur. Or, ce dégazage est nécessaire pour éviter les risques d'explosion de l'emballage lorsqu'il est soumis à une trop forte pression.

Par ailleurs, un procédé selon lequel la fermeture des emballages de cuisson est réalisée à l'intérieur de l'enceinte de chauffage présente toutefois l'inconvénient de nécessiter le maintien de l'emballage dans une position fixe pendant toute la durée du traitement, et ce, jusqu'à sa fermeture par soudure qui est réalisée à l'intérieur de l'enceinte.

En outre, même si la fermeture totale d'emballages de type poches à l'intérieur de l'enceinte de chauffage est théoriquement réalisable, elle présente néanmoins trop de risques d'accidents ou de pannes, qui provoquent l'arrêt momentané du chauffage du produit, ainsi que la mise au rebus de la production en cours de traitement.

Enfin, dans le cas d'une fermeture de l'emballage immédiatement après la cuisson, on connait déjà la demande de brevet français FR 285291 qui décrit un procédé pour traiter un produit consommable de type alimentaire, comprenant les étapes successives suivantes ;
a) introduction du produit dans un emballage (notamment de type poche ou sachet) ;
b) fermeture partielle de l'emballage en laissant une zone provisoirement ouverte entre deux parois de l'emballage ;
c)chauffage du produit dans l'emballage partiellement fermé, dans une enceinte de chauffage comportant un générateur de micro-ondes ; et
d) fermeture totale de l'emballage après chauffage.

De manière idéale, cette fermeture totale de l'emballage doit être réalisée immédiatement à l'issue du chauffage alors qu'une légère surpression (de préférence d'au moins 0,2 bar) règne encore dans l'emballage, ce qui permet d'éviter tout risque de contamination du produit dans l'environnement extérieur de cet emballage. Or rien n'est dit dans la demande de brevet français FR 285291 concernant la durée s'écoulant entre la fin du chauffage et le moment de fermeture totale de l'emballage.

En outre, le chauffage se faisant par micro-ondes, seul le produit est chauffé et non l'emballage, ce qui favorise le refroidissement du produit entre la fin du chauffage et la fermeture totale de l'emballage. Or, l'installation décrite dans FR 285291 pour la mise en oeuvre de ce procédé ne comporte qu'un seul convoyeur (en particulier de type tapis roulant) qui réalise l'acheminement du produit de l'entrée de l'enceinte jusqu'à sa sortie, et ce, jusqu'au dispositif pour la fermeture totale de l'emballage. Etant donné que la vitesse d'avancement de ce convoyeur unique doit être réglée de manière que la durée de stationnement d'un produit dans l'enceinte de chauffage soit suffisante pour en permettre la cuisson, la vitesse d'avancement du convoyeur devra être nécessairement suffisamment faible pour permettre cette cuisson. Mais cette vitesse d'avancement sera également trop faible pour que le produit atteigne sans trop se refroidir le dispositif de fermeture totale de l'emballage.

La présente invention propose donc une installation et un procédé pour traiter un produit consommable, notamment de type alimentaire contenu dans un emballage, qui remédie aux inconvénients de l'art antérieur par le contrôle de la température du produit et de l'emballage au moment de sa fermeture totale.

Plus particulièrement, la présente invention a pour objet un procédé pour traiter un produit consommable, en particulier un produit alimentaire, ce procédé comprenant les étapes successives suivantes :
a) introduction dans un emballage du produit ;
b) fermeture partielle de l'emballage en préservant au moins une zone de contrôle de pression à la surface de l'emballage;
c) chauffage par micro-ondes du produit dans l'emballage partiellement fermé jusqu'à une température comprise entre 95°C et 105°C, de préférence de l'ordre de 100°C, ce chauffage provoquant un dégagement de vapeur par le contenu de l'emballage qui occasionne une surpression à l'intérieur de l'emballage ;
d) fermeture totale de l'emballage au niveau de la zone de contrôle de pression.

Selon l'invention, les étapes c) de chauffage et d) de fermeture totale de l'emballage sont réalisées en continu, et l'étape c) de chauffage par micro-ondes du produit est couplée avec le chauffage simultané de l'emballage à une température comprise entre 60°C et 120°C, tandis que l'étape d) de fermeture totale de l'emballage est réalisée immédiatement après l'étape c) de chauffage du produit alors que la température du produit (14) reste comprise 95°C et 105°C et que celle de l'emballage est comprise entre 60°C et 120°C, avec une légère surpression présente dans l'emballage.

L'étape c) de chauffage par micro-ondes du produit dans l'emballage partiellement fermé permet de cuire très rapidement les produits. Au cours de cette étape c) de chauffage, une partie de l'eau intrinsèque du produit (en d'autres termes l'eau initialement contenue dans le produit) s'évapore au niveau de la zone de contrôle de pression de surface de l'emballage, ce qui permet d'éviter tout risque d'éclatement de l'emballage en cours de cuisson.

Avantageusement, l'étape d) de fermeture totale de l'emballage est réalisée moins de 5 secondes après la fin de l'étape c) de chauffage du produit, de sorte que la température du produit dans l'emballage est encore d'au moins 100°C au moment de la fermeture, et il règne encore à l'intérieur de l'emballage une légère surpression qui est avantageusement d'au moins 0,2 bar et de préférence d'au moins 0,4 bar.

Cette légère surpression dans l'emballage au moment de la fermeture à pour effet d'éviter tout risque de contamination du produit dans l'emballage par des produits ou substances se trouvant à l'extérieur de ce dernier.

Selon un mode réalisation particulièrement avantageux de la présente invention, on utilise comme emballage une poche souple en matériau composite ou plastique, perméable aux micro-ondes et qui présente en volume d'au moins deux fois celui du produit

L'emballage peut-être par exemple une poche souple rectangulaire, soudée sur trois côtés, mais dont un côté, par lequel on a introduit le produit dans l'emballage, est resté non soudé. Puis, on referme l'emballage en soudant ce coté ayant permis l'introduction du produit en préservant une zone provisoirement non soudée qui sert de zone de contrôle de pression.

Avantageusement, cette zone de contrôle de pression est située à la surface de la poche, par exemple à l'un de ses coins si la poche est de forme carrée ou rectangulaire, et la zone de contrôle de pression peut prendre la forme d'une cheminée de dégazage.

Un emballage de type poche ou sachet présente la double caractéristique de pouvoir supporter une surpression en amont du traitement (cuisson) et une rétractation en fin de cuisson.

Avantageusement, lors de l'étape a) d'introduction dudit produit consommable dans un emballage, on introduit également un liquide additionnel, qui est de préférence présent à raison de 1 à 2 ml pour 100 g de produit. De manière davantage préférée, ce liquide additionnel est aqueux.

A titre de liquide aqueux utilisable dans le cadre de la présente invention, on conseille de l'eau pure ou de l'eau contenant un ou plusieurs additifs.

Ces additifs peuvent par exemple être choisis parmi les colorants, les conservateurs, les agents de saveur, les parfums, les corps gras émulsionnés.

Par ailleurs, lors du chauffage c) du produit, ce liquide additionnel se vaporise très rapidement et la vapeur ainsi générée crée rapidement une surpression, qui favorise la cuisson du produit contenu dans l'emballage.

La présente invention a encore pour objet une installation pour la mise en oeuvre du procédé de l'invention.

Plus particulièrement, la présente invention a pour objet une installation en ligne pour traiter un produit consommable, en particulier un produit alimentaire dans un emballage comprenant les postes suivants :
- un poste de chauffage, qui comporte une enceinte de chauffage et un générateur de micro-ondes,
- des moyens d'acheminement du produit dans son emballage, pour le transporter dans ladite installation, lesdits moyens d'acheminement comportant des moyens d'entrainement du produit pour le transporter au travers de l'enceinte de chauffage,
- des moyens de fermeture partielle aptes à fermer partiellement l'emballage en préservant au moins une zone de contrôle de pression à la surface de l'emballage, lesdits moyens de fermeture partielle étant disposés en amont du poste de chauffage, et
- des moyens complémentaires de fermeture aptes à fermer ladite zone de contrôle, lesdits moyens complémentaires de fermeture étant disposés en aval du poste de fermeture,
   ladite installation étant **caractérisée en ce que :**
- l'enceinte de chauffage est un tunnel ouvert avec une entrée et une sortie, qui sont chacune munie de moyens de piège d'ondes parasites, qui peuvent être par exemple constitués de cavités métalliques court-circuitantes continues ou discrètes,
- les moyens d'entrainement du produit au travers de l'enceinte de chauffage comportent d'une part des moyens d'entrée pour amener le produit dans l'enceinte, et d'autre part des moyens de sortie pour sortir le produit de l'enceinte et l'amener jusqu'aux moyens complémentaires de fermeture, et
- le poste de chauffage comporte, outre le générateur de micro-ondes, des moyens spécifiques pour chauffer l'emballage, qui sont avantageusement constitués par un dispositif de soufflage d'air chaud disposés dans l'enceinte de chauffage, de préférence au niveau des moyens de piège d'ondes d'entrée.

Dans le cas où les moyens de piège d'ondes sont constitués de cavités métalliques court-circuitantes continues ou discrètes, bien évidemment la hauteur des ces cavités sera adaptée pour laisser sortir de l'enceinte les produits dans leur emballage.

Avantageusement, l'enceinte de chauffage de l'installation selon l'invention comporte en outre des arrivées d'ondes, qui sont disposées à la fois sur la partie inférieure de l'enceinte et sur sa partie supérieure. Ces arrivées d'ondes servent à moduler la répartition et la puissance des micro-ondes dans l'enceinte de chauffage. Cette modulation des micro-ondes a pour effet d'optimiser la rapidité et la qualité de la cuisson de certains produits qu'ils soient frais ou surgelés, et ce quelque soit le type de conditionnement (par exemple un seul type de produit par emballage ou un mélange de produits dans un seul emballage).

Selon un mode de réalisation particulièrement avantageux de la présente invention, les moyens d'entrainement du produit dans l'enceinte comportent au moins deux tapis roulants qui sont répartis comme suit :
- un premier tapis traversant l'enceinte de chauffage pour amener à une vitesse V₁ le produit dans son emballage dans ladite enceinte de chauffage jusqu'à la sortie de ladite enceinte, la vitesse V₁ du premier tapis variant entre 25 cm/min et 80 cm/min, et
- un deuxième tapis disposé en aval de l'enceinte de chauffage pour sortir le produit dans son emballage hors de l'enceinte et l'amener à une vitesse V₂ vers les moyens complémentaires de fermeture, la vitesse V₂ du deuxième tapis variant entre 10 m/min et 30 m/min.

De préférence, la vitesse V₁ du premier tapis est de l'ordre de 36 cm/min, tandis que la vitesse V₂ du deuxième tapis est de l'ordre de 21 m/min.

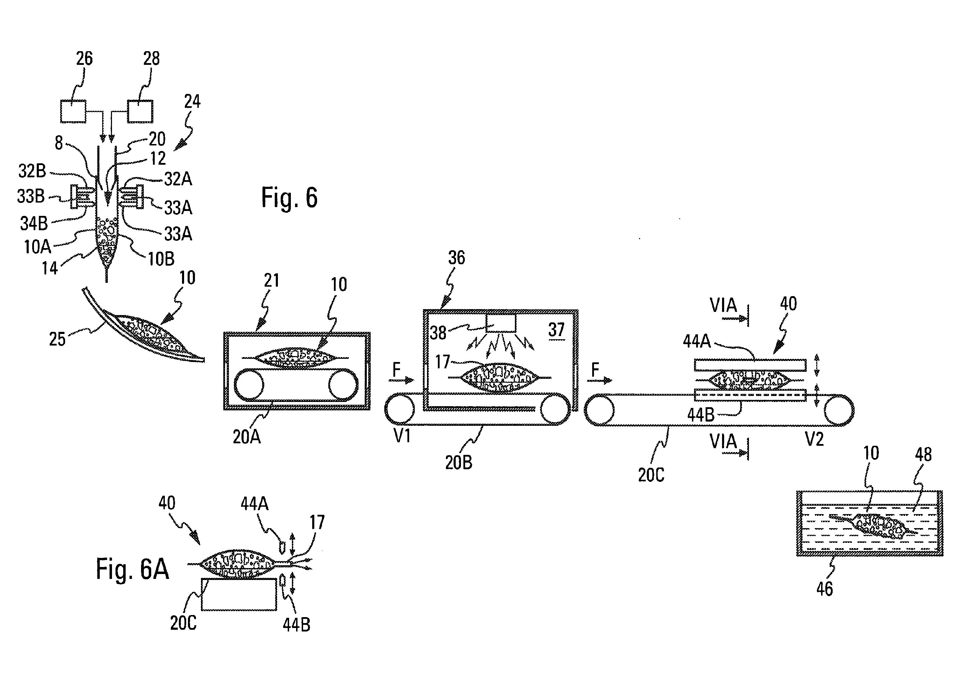

Par ailleurs, un dispositif de mesure du poids net de chaque emballage après l'étape de chauffage c) peut être avantageusement placé dans l'installation, au niveau de la sortie de l'enceinte (non représentés sur la figure 6).

Enfin, l'enceinte de chauffage peut être avantageusement équipée à sa sortie d'une partie contendante, qui est apte à détecter et ouvrir tout emballage présentant un gonflement anormal dans l'enceinte, qui pourrait gêner son extraction hors de l'enceinte de chauffage (non représentés sur la figure 6).

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :
- la figure 1 montre un emballage du type d'une poche souple, dans lequel un produit alimentaire est sur le point d'être disposé pour y être traité et conditionné;
- les figures 2A à 4B illustrent des étapes successives du procédé selon l'invention, qui sont appliquées à un tel emballage;
- la figure 5 montre l'emballage dans son état final;
- la figure 6 illustre schématiquement une installation selon l'invention;
- la figure 6A est une coupe selon la ligne VIA-VIA de la figure 6 ; et
- la figure 7 montre différentes variantes de répartition des produits dans leur emballage lorsqu'ils sont disposés sur un convoyeur à l'intérieur de l'enceinte de chauffage de l'installation selon l'invention.

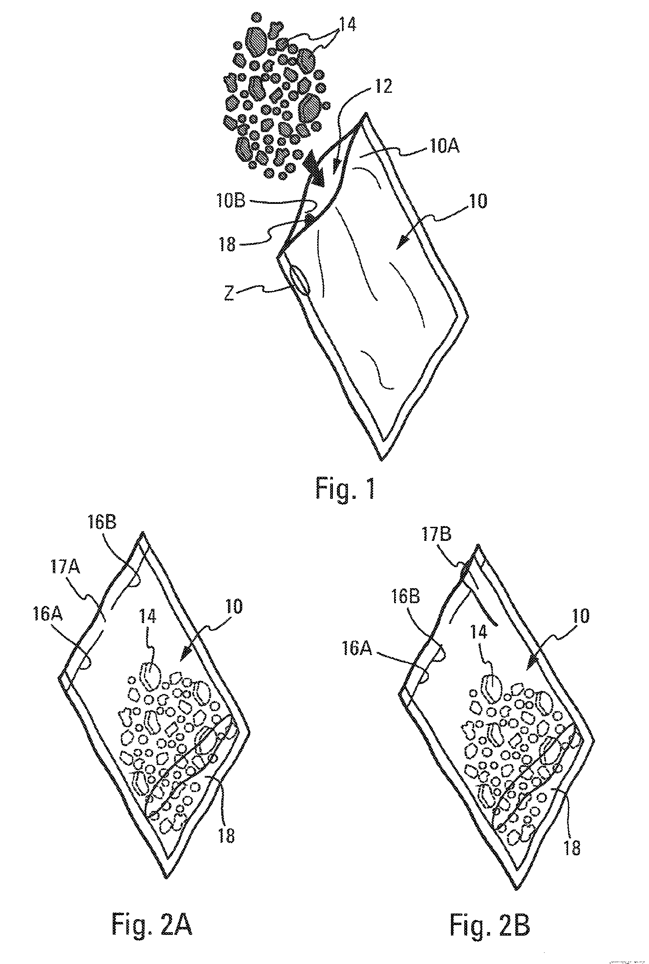

Sur la figure 1, est représenté un emballage 10 ouvert et vide, qui est par exemple constitué par une poche souple 10. Celle-ci 10 présente une ouverture 12 ménagée entre ses parois 10A et 10B. Un produit consommable, par exemple des morceaux de légumes 14, est introduit dans la poche 10 par l'ouverture 12.

Avec le produit consommable 14, un liquide 18 peut être introduit dans la poche 10. Dans l'exemple représenté, le produit 14 et le liquide 18 sont 30 introduits par l'ouverture 12. C'est en travers de cette ouverture qu'est ensuite soudée la poche 10 partiellement.

Les figures 2A et 2B montrent la poche 10 contenant le produit, qui est partiellement fermée et prête à subir le chauffage. Les deux parois 10A et 10B sont soudées entre elles en travers de l'ouverture 12 par deux lignes de soudure 16A et 16B, entre lesquelles est préservée une zone provisoirement non soudée 17A, 17B.

Dans l'exemple représenté sur la figure 2B, les deux portions 16A et 16B sont deux portions d'une même zone soudée rectiligne, interrompue localement de manière à constituer ainsi une ouverture 17A apte à permettre l'échappement de la vapeur en excès créée lors de la cuisson du produit 14. Bien entendu, non pas une, plusieurs zones provisoirement non soudées 17A pourraient être préservées.

L'exemple représenté sur la figure 2A montre que l'on peut également prévoir que la poche présente non pas seulement une simple interruption locale de la soudure de ses parois, mais une véritable cheminée de dégazage 17B, créée par la formation d'une petite soudure s'étendant perpendiculairement aux lignes de soudure 16A, 16B, mais sur une partie seulement de la longueur de la poche 10. Cette cheminée de dégazage 17B pourra être avantageusement située à l'un des coins de la poche souple 10.

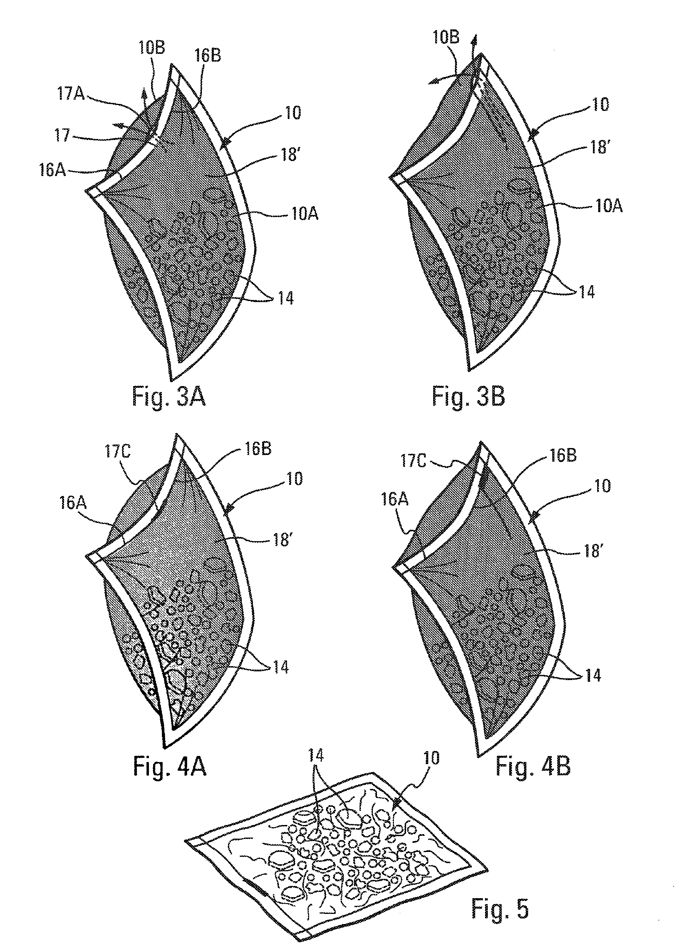

Les figures 3A et 3B montrent la situation lors du chauffage des poches représentées sur les figures 2A et 2B, respectivement. Sous l'effet du chauffage, la pression à l'intérieur de la poche augmente, en particulier en raison de l'évaporation d'eau due à l'augmentation de la température. L'eau qui s'évapore peut intégralement provenir du produit consommable 14 (il peut par exemple s'agir de légumes frais ou semi-frais ayant une certaine teneur en eau) ou bien elle peut également provenir du liquide 18 lorsque celui-ci est un liquide aqueux. La vapeur 18' emplit 10 l'espace intérieur de la poche et, la vaporisation augmentant à mesure que la température s'élève, les parois 10A et 10B de la poche se déforment de manière à permettre une augmentation de son volume. La vapeur en excès s'échappe par l'ouverture 17A ménagée entre les parois 10A et 10B du fait de la présence de la zone provisoirement non soudée dans le cas où l'on utilise la poche souple représentée sur la figure 2A. La vapeur en excès s'échappe par la cheminée de dégazage 17B dans le cas où l'on utilise la poche souple représentée sur la figure 2B.

Avantageusement, la dimension de l'ouverture 17A ou de la cheminée de dégazage 17B est suffisamment faible pour que, tout en permettant une évacuation de la pression de vapeur en excès, elle permette l'établissement d'une surpression à l'intérieur de la poche. En effet, une telle surpression de vapeur favorise la cuisson du produit 14 lors du chauffage c).

Les figures 4A et 4B montrent la situation à l'issue du chauffage des poches représentées respectivement sur les figures 2A et 3A d'une part et 2B et 3B d'autre part. Ces figures montrent qu'à la place de l'ouverture 17A ou de la cheminée de dégazage 17B, une soudure 17C a été pratiquée de manière à totalement fermer la poche 10.

Après la fermeture totale de la poche 10 par la soudure 17C, la poche 10 et son contenu (le produit 14) ont subi un refroidissement brusque pour parvenir dans l'état représenté sur la figure 5. On voit que les parois de la poche 10 sont plaquées contre le produit 14 contenu dans cette poche 10, qu'elles enserrent entre elles. En effet, le refroidissement brutal a permis de brutalement condenser la vapeur subsistant à l'intérieur de la poche 10 après sa fermeture, ce qui a pour effet une diminution brutal de la pression à l'intérieur de la poche 10. Un effet de vide partiel est ainsi réalisé, qui favorise la conservation du produit 14 et la manipulation de la poche 10 dont le volume a diminué.

La figure 6 montre une installation permettant de mettre en oeuvre le procédé de l'invention. Par exemple, l'emballage 10 est formé à partir d'un tube de film 8, retenu sur un support creux 20, également tubulaire. L'extrémité inférieure du tube 8 est fermée ; c'est dans la partie inférieure que sera formé l'emballage 10. Dans un premier temps, par l'intérieur du support 20, le produit consommable 14 initialement contenu dans un réservoir 26 ou analogue, ainsi que le liquide initialement contenu dans un réservoir 28 sont déversés dans la partie inférieure du tube 8. Lorsqu'une quantité suffisante a été déversée de la sorte, cette partie inférieure du tube 8 peut être fermée et découpée pour former un emballage 10.

Plus précisément, l'installation comprend des moyens de fermeture partiels tels que deux électrodes de soudure 34A et 34B pouvant pincer entre elles les parois 10A et 10B, en travers de l'ouverture 12. Ces électrodes de soudure présentent une zone interrompue de manière à, lors de cette soudure, préserver une zone non soudée du type de l'ouverture 17A ou de la cheminée de dégazage 17B, comme cela est illustré sur les figures 2A à 4A d'une part, et les figures 2B à 4B d'autre part.

Lorsque cette soudure a été réalisée, des outils de découpe 33A et 33B peuvent être activés pour découper la partie inférieure du tube 10, 15 juste au-dessus de la soudure réalisée par les électrodes 34A et 34B, de manière à former un emballage 10. D'autres moyens de fermeture tels que des électrodes de soudure 32A et 32B peuvent être activés, par exemple en même temps que les électrodes 34A et 34B, pour souder l'une contre l'autre les deux parois du tube 8, au-dessus de la découpe faite par 20 les outils 33A et 33B. De préférence, la soudure réalisée par ces électrodes 32A et 32B réalise une fermeture complète de ce qui, après la découpe par les outils 33A et 33B, deviendra la nouvelle extrémité inférieure du tube 8.

Lors de cette découpe, l'emballage formé par une poche 10 se détache du tube 8 et tombe sur un toboggan 25. Il est ainsi acheminé jusqu'à une première station de l'installation. Cette première station 21 comprend des moyens tels qu'un tapis roulant vibrant 20A, qui sert à répartir de manière homogène le contenu de la poche à l'intérieur de cette dernière, qui est alors disposée à plat. Dans cette station 21, par des moyens non représentés, la poche peut également être pivotée de 90° dans un plan horizontal, de telle sorte que les lignes de soudure de ses deux extrémités qui, dans la position de la poche représentée dans la station 21, s'étendent perpendiculairement au plan de la figure 6, soient orientées parallèlement à ce plan.

A la sortie de la station 21, la poche 10 est prise en charge par un nouveau convoyeur 20B qui, avançant dans le sens F à une vitesse V₁ relativement faible, l'entraîne dans un poste de chauffage 36 comprenant avantageusement une enceinte 37 de chauffage, à l'intérieur de laquelle est disposée un générateur de micro-ondes 38.

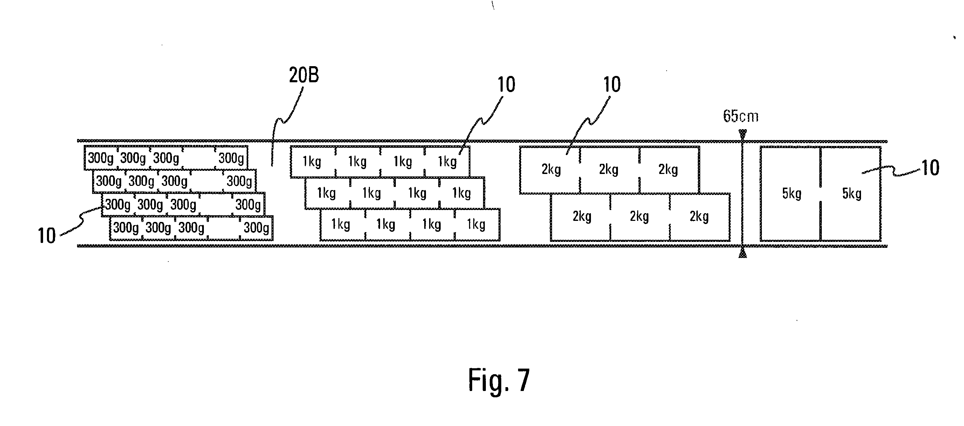

L'enceinte de chauffage 37 présente une entrée 371 et une sortie 372, qui sont chacune munie de moyens de piège d'ondes 373 (non représentés sur la figure 6). Bien entendu, plusieurs poches 10 peuvent se trouver simultanément dans l'enceinte 37, comme le montre la figure 7.

En particulier, la figure 7 montre comment la répartition des poches 10 est optimisée en fonction de la taille et de la contenance des poches 10.

Ainsi, comme le montre la figure 7, on peut utiliser à titre de convoyeur 20B un tapis roulant dont la largeur est de 65 cm et dont la vitesse V₁ est suffisamment faible pour permettre la cuisson à coeur des aliments 14 dans leurs emballages 10. Cette vitesse V1 d'avancement du tapis roulant 20B dépend d'une part de la taille des poches 10 et du poids de leur contenu 14, et d'autre part de leur répartition sur le tapis 20B. La longueur de l'enceinte de chauffage 37 et la vitesse d'avancement V₁ du convoyeur 20B peuvent être réglés de telle sorte que la durée de stationnement d'une poche 10 dans l'enceinte 36 soit suffisante pour permettre le chauffage désiré.

Ainsi, des poches 10 rectangulaires, de dimensions 150 mm x 200 mm et ayant une contenance de 300 g, seront avantageusement réparties en quatre rangées, dans le sens de la longueur. Pour produire 250 kg/h de produits 14 conditionnés de cette manière, la vitesse V₁ du tapis 20B sera de l'ordre de 46 m/h.

Pour des poches 10 rectangulaires, de dimensions 200 mm x 300 mm et ayant une contenance de 1 kg, celles-ci seront avantageusement réparties en trois rangées, également dans le sens de la longueur. Pour produire 250 kg/h de produits 14 conditionnés de cette manière, la vitesse V₁ du tapis 20B sera de l'ordre de 25 m/h.

Pour des poches 10 rectangulaires, de dimensions 300 mm x 400 mm et ayant une contenance de 2 kg, celles-ci seront avantageusement réparties en deux rangées, également dans le sens de la longueur. Pour produire 250 kg/h de produits 14 conditionnés de cette manière, la vitesse V₁ du tapis 20B sera également de l'ordre de 25 m/h.

Pour des poches 10 rectangulaires, de dimensions 600 mm x 400 mm et ayant une contenance de 5 kg, celles-ci seront avantageusement réparties en une rangée, mais cette fois dans le sens de la largeur. Pour produire 250 kg/h de produits 14 conditionnés de cette manière, la vitesse V₁ du tapis 20B sera dans ce cas de l'ordre de 20 m/h.

En aval du poste de chauffage 36, l'installation comprend un poste de fermeture complémentaire 40 dans lequel la poche 10 est entraînée par un deuxième convoyeur 20C, qui est disposé immédiatement en aval de la sortie 372 de l'enceinte 37. Il s'agit par exemple d'un tapis roulant 20C, dont la vitesse V₂ est de l'ordre de 14 m/min.

Le poste de chauffage 36 comprend des moyens complémentaires de fermeture 40 comprenant par exemple des électrodes de soudure 44A et 44B, aptes à pincer entre elles les deux parois de la poche en travers de la zone laissée provisoirement non soudée par les électrodes 34A et 34B. Ces 15 deux électrodes 44A et 44B peuvent être sensiblement analogues aux électrodes 34A et 34B mais, contrairement à cette dernière, s'étendre sur l'intégralité de la largeur de la poche. Elles peuvent également ne s'étendre que sur la longueur de la zone laissée provisoirement non soudée 17A (ouverture), 17B (cheminée de dégazage) ou, de préférence, sur une longueur au moins légèrement supérieure. Le poste de fermeture complémentaire 40 est disposé à une distance telle de la sortie 372 de l'enceinte, qu'un produit 14 dans son emballage 10 peut être amené moins de 5 secondes après la sortie de l'enceinte de chauffage 37.

On voit sur la coupe de la figure 6A que, sur le convoyeur 20B, la poche 10 peut être disposée de telle sorte que son extrémité comprenant la zone provisoirement non soudée dépasse au-delà du bord du convoyeur 20B. L'électrode inférieure 44B des moyens de soudure complémentaires 25 peut donc être déplacée sans obstacle.

En aval des moyens complémentaires 40 de fermeture, l'installation peut avantageusement comporter des moyens pour refroidir brusquement le contenu de l'emballage. Ils comprennent par exemple une cuve 46 contenant de l'eau froide 48, dans laquelle les poches 10 peuvent être immergées. La température de l'eau peut être maintenue suffisamment basse par l'entretien d'une circulation d'eau et l'utilisation de moyens de refroidissement non représentés. Par exemple, une cuve 46 est simplement placée en bout du convoyeur 20, et l'emballage 10 tombe naturellement dans cette cuve à la sortie du poste 40.

Alors que dans le poste 36, la poche 10 s'était gonflée sous l'effet de la surpression générée lors du chauffage, elle se rétracte dans la cuve 46.

On voit sur la figure 6A que la fermeture totale est réalisée alors que l'intérieur de la poche est toujours en surpression, de la vapeur continuant de s'échapper par l'ouverture partielle 17.

## Revendications

1. Procédé pour traiter un produit consommable (14), en particulier un produit alimentaire, ledit procédé comprenant les étapes successives suivantes :
a) introduction dans un emballage (10) dudit produit (14) ;
b) fermeture partielle de l'emballage en préservant au moins une zone de contrôle de pression (17A, 17B) à la surface de l'emballage (10) ;
c) chauffage par micro-ondes du produit (14) dans l'emballage (10) partiellement fermé jusqu'à une température comprise entre 95°C et 105°C, de préférence de l'ordre de 95°C, ladite précuisson c) du produit (14) provoquant un dégagement de vapeur par le contenu de l'emballage (10) qui occasionne une surpression à l'intérieur dudit emballage (10) ;
d) fermeture totale de l'emballage (10) au niveau de la zone de contrôle de pression (17A, 17B) ;
ledit procédé étant **caractérisé en ce que** les étapes c) de chauffage par micro-ondes du produit (14) et d) de fermeture totale de l'emballage (10) sont réalisées en continu, et
**en ce que** :
• l'étape c) de chauffage par micro-ondes du produit (14) est couplée avec le chauffage simultané de l'emballage (10) à une température comprise entre 60°C et 120°C ;
• l'étape d) de fermeture totale de l'emballage (10) est réalisée immédiatement après l'étape c) de chauffage du produit (14) alors que la température dudit produit (14) reste comprise entre 95°C et 105°C et celle de l'emballage (10) est encore entre 60°C et 120°C, avec une légère surpression présente dans l'emballage (10).

2. Procédé selon la revendication 1, **caractérisé en ce que** l'étape d) de fermeture totale de l'emballage (10) est réalisée moins de 5 secondes après l'étape c) de chauffage du produit (14).

3. Procédé selon la revendication 1 ou 2, **caractérisé en ce que** la zone de contrôle de pression (17A, 17B) à la surface de l'emballage (10) est constituée par une cheminée de dégazage (17B).

4. Procédé selon l'une quelconque des revendications précédentes, **caractérisé en ce que** la surpression dans l'emballage (10) lors de l'étape d) de fermeture totale de l'emballage (10) est au moins sensiblement égale à 0,2 bar, de préférence au moins sensiblement égale à 0,4 bar.

5. Procédé selon l'une quelconque des revendications précédentes, **caractérisé en ce que**, lors de l'étape a) d'introduction dudit produit (14) dans l'emballage (10), on introduit également un liquide additionnel (18), qui est de préférence présent à raison de 1 à 2 ml pour 100 g de produit.

6. Procédé selon la revendication 5, **caractérisé en ce que** le liquide (18) est essentiellement aqueux.

7. Procédé selon la revendication 6, **caractérisé en ce que** le liquide (18) comprend de l'eau et au moins un additif.

8. Procédé selon l'une quelconque des revendications précédentes, **caractérisé en ce que** l'emballage (10, 60) est une poche (10) en film de matériau composite ou plastique.

9. Installation (1) en ligne pour traiter un produit consommable (14), en particulier un produit alimentaire dans un emballage (10) comprenant les postes suivants :
- un poste de chauffage (36), qui comporte une enceinte de chauffage (37) et un générateur de micro-ondes (38),
- des moyens d'acheminement (20A, 20B, 20C) du produit (14) dans son emballage (10), pour le transporter dans ladite installation (1), lesdits moyens d'acheminement (20A, 20B, 20C) comportant des moyens d'entrainement du produit (20B, 20C) pour le transporter au travers de l'enceinte de chauffage (37),
- des moyens de fermeture partielle (34A, 34B) aptes à fermer partiellement l'emballage (10) en préservant au moins une zone de contrôle de pression (17A, 17B) à la surface de l'emballage (10), lesdits moyens de fermeture partielle (34A, 34B) étant disposés en amont du poste de chauffage (36),et
- des moyens complémentaires de fermeture (40) aptes à fermer ladite zone de contrôle (17A, 17B), lesdits moyens complémentaires de fermeture (40) étant disposés en aval du poste de chauffage (36),
ladite installation (1) étant **caractérisée en ce que** :
- l'enceinte de chauffage (37) est un tunnel ouvert avec une entrée (371) et une sortie (372), qui sont chacune munie de moyens (373) de piège d'ondes parasites,
- les moyens d'entrainement (20B, 20C) du produit (14) au travers de l'enceinte de chauffage (37) comportent des moyens d'entrainement d'entrée (20B) pour amener le produit (14) dans l'enceinte de chauffage (37) jusqu'à la sortie (372) de l'enceinte (37), et des moyens d'entrainement de sortie (20C) pour sortir le produit (14) hors de l'enceinte de chauffage (37) et l'amener jusqu'aux complémentaires de fermeture (40), et
- le poste de chauffage (36) comporte, outre le générateur de micro-ondes (38), des moyens spécifiques de chauffage (39) de l'emballage (10).

10. Installation (1) selon la revendication 9, **caractérisée en ce que** les moyens (39) pour chauffer l'emballage (10) consistent en un dispositif de soufflage d'air chaud.

11. Installation (1) selon la revendication 9 ou 10, **caractérisée en ce que** les moyens de piège d'ondes (373) sont constitués de cavités métalliques court-circuitantes, continues ou discrètes, qui encadrent chacune l'entrée et la sortie de l'enceinte.

12. Installation (1) selon la revendication 11, **caractérisée en ce que** la hauteur des cavités métalliques (373) est adaptée pour laisser sortir de l'enceinte de chauffage (37) les produits (14) dans leur emballage (10).

13. Installation (1) selon l'une quelconque des revendications 9 à 12, **caractérisée en ce que** l'enceinte de chauffage (37) comporte en outre des arrivées (3741, 3751) sur sa partie inférieure (374) et sa partie supérieure (375).

14. Installation (1) selon l'une quelconque des revendications 9 à 13, **caractérisée en ce que** les moyens d'entrainement (20B, 20C) comportent des tapis roulants, qui sont répartis comme suit :
- un premier tapis (20B) traversant l'enceinte de chauffage (37) pour amener à une vitesse V₁ le produit (14) dans son emballage (10) dans ladite enceinte de chauffage (37) jusqu'à la sortie (372) de ladite enceinte (37), la vitesse V₁ dudit premier tapis (20B) variant entre 25 cm/min et 80 cm/min, et
- un deuxième tapis disposé en aval de l'enceinte de chauffage (37) pour sortir le produit (14) dans son emballage (10) hors de l'enceinte (37) et l'amener à une vitesse V₂ vers les moyens complémentaires de fermeture (40), la vitesse V₂ dudit deuxième tapis (30C) variant entre 10 m/min et 30 m/min.

15. Installation (1) selon la revendication 14, **caractérisée en ce que** la vitesse V₁ dudit premier tapis (20B) est de l'ordre de 36 cm/min, et la vitesse V₂ dudit deuxième tapis (30C) est de l'ordre de 21 m/min.

## Patentansprüche

1. Verfahren zum Verarbeiten eines verzehrbaren Erzeugnisses (14), insbesondere eines Lebensmittelerzeugnisses, wobei das Verfahren die folgenden aufeinanderfolgenden Schritte umfasst:
a) Einführen des Erzeugnisses (14) in eine Verpackung (10);
b) teilweises Schließen der Verpackung unter Bewahrung mindestens einer Druckkontrollzone (17A, 17B) an der Oberfläche der Verpackung (10);
c) Erhitzen des Erzeugnisses (14) in der teilweise geschlossenen Verpackung (10) durch Mikrowellen bis auf eine Temperatur zwischen 95 °C und 105 °C, bevorzugt etwa 95 °C, wobei das Vorkochen c) des Erzeugnisses (14) eine Dampfentwicklung durch den Inhalt der Verpackung (10) verursacht, die im Innern der Verpackung (10) einen Überdruck bewirkt;
d) vollständiges Schließen der Verpackung (10) an der Druckkontrollzone (17A, 17B);
wobei das Verfahren **dadurch gekennzeichnet ist, dass** die Schritte c) des Erhitzens des Erzeugnisses (14) durch Mikrowellen und d) des vollständigen Verschließens der Verpackung (10) ununterbrochen ausgeführt werden, und dass:
- - der Schritt c) des Erhitzens des Erzeugnisses (14) durch Mikrowellen mit dem gleichzeitigen Erhitzen der Verpackung (10) auf eine Temperatur zwischen 60 ° C und 120 ° C gekoppelt ist;
- - der Schritt d) des vollständigen Schließens der Verpackung (10) sofort nach dem Schritt (c) des Erhitzens des Erzeugnisses (14) ausgeführt wird, während die Temperatur des Erzeugnisses (14) zwischen 95 ° C und 105 ° C bleibt und die der Verpackung (10)noch zwischen 60 ° C und 120 °C liegt, wobei ein geringer Überdruck in der Verpackung (10) vorliegt.

2. Verfahren nach Anspruch 1, **dadurch gekennzeichnet, dass** der Schritt d) des vollständigen Schließens der Verpackung (10) mindestens 5 Sekunden nach dem Schritt (c) des Erhitzens des Erzeugnisses (14) ausgeführt wird.

3. Verfahren nach Anspruch 1 oder 2, **dadurch gekennzeichnet, dass** die Druckkontrollzone (17A, 17B) an der Oberfläche der Verpackung (10) aus einem Entgasungskanal (17B) besteht.

4. Verfahren nach einem der vorhergehenden Ansprüche, **dadurch gekennzeichnet, dass** der Überdruck in der Verpackung (10) während des Schritts d) des vollständigen Schließens der Verpackung (10) mindestens im Wesentlichen gleich 0,2 bar, bevorzugt mindestens im Wesentlichen gleich 0,4 bar ist.

5. Verfahren nach einem der vorhergehenden Ansprüche, **dadurch gekennzeichnet, dass** während des Schritts a) des Einführens des Erzeugnisses (14) in die Verpackung (10) auch eine zusätzliche Flüssigkeit (18) eingeführt wird, die bevorzugt in Höhe von 1 bis 2 ml für 100 g des Erzeugnisses vorliegt.

6. Verfahren nach Anspruch 5, **dadurch gekennzeichnet, dass** die Flüssigkeit (18) im Wesentlichen wässrig ist.

7. Verfahren nach Anspruch 6, **dadurch gekennzeichnet, dass** die Flüssigkeit (18) Wasser und mindestens einen Zusatzstoff umfasst.

8. Verfahren nach einem der vorhergehenden Ansprüche, **dadurch gekennzeichnet, dass** die Verpackung (10, 60) ein Folienbeutel (10) aus Verbundmaterial oder Plastik ist.

9. Inline-Anlage (1) zum Verarbeiten eines verzehrbaren Erzeugnisses (14), insbesondere eines Lebensmittelerzeugnisses in einer Verpackung (10), umfassend folgende Stationen:
- eine Heizstation (36), die einen Heizraum (37) und einen Mikrowellengenerator (38) umfasst,
- Mittel (20A, 20B, 20C) zum Befördern des Erzeugnisses (14) in seiner Verpackung (10), um es in der Anlage (1) zu transportieren, wobei die Beförderungsmittel (20A, 20B, 20C) Mittel zum Mitnehmen des Erzeugnisses (20B, 20C) umfassen, um es durch den Heizraum (37) zu transportieren,
- Mittel (34A, 34B) zum teilweisen Schließen, die geeignet sind, um die Verpackung (10) teilweise zu schließen, wobei sie mindestens eine Druckkontrollzone (17A, 17B) an der Oberfläche der Verpackung (10) bewahren, wobei die Mittel (34A, 34B) zum teilweisen Schließen stromaufwärts von der Heizstation (36) angeordnet sind, und
- ergänzende Schließmittel (40), die geeignet sind, um die Kontrollzone (17A, 17B) zu schließen, wobei die ergänzenden Schließmittel (40) stromabwärts von der Heizstation (36) angeordnet sind,
wobei die Anlage (1) **dadurch gekennzeichnet ist, dass**:
- der Heizraum (37) ein offener Tunnel mit einem Eingang (371) und einem Ausgang (372) ist, die jeweils mit Mitteln (373) mit Störwellenfallen versehen sind,
- die Mittel (20B, 20C) zum Mitnehmen des Erzeugnisses (14) durch den Heizraum (37) Eingangsmitnahmemittel (20B), um das Erzeugnis (14) in den Heizraum (37) bis zum Ausgang (372) des Raums (37) zu bringen, und Ausgangsmitnahmemittel (20C), um das Erzeugnis (14) aus dem Heizraum (37) herauszubringen und es bis zu den Mitteln (40) des ergänzenden Schließens zu bringen, umfassen, und
- die Heizstation (36) außer dem Mikrowellengenerator (38) spezifische Mittel (39) zum Erhitzen der Verpackung (10) umfasst.

10. Anlage (1) nach Anspruch 9, **dadurch gekennzeichnet, dass** die Mittel (39) zum Erhitzen der Verpackung (10) aus einer Heißluft-Gebläsevorrichtung bestehen.

11. Anlage (1) nach Anspruch 9 oder 10, **dadurch gekennzeichnet, dass** die Wellenfallenmittel (373) aus kurzschließenden, durchgehenden oder getrennten, metallischen Hohlräumen bestehen, die jeweils den Eingang und den Ausgang des Raums einrahmen.

12. Anlage (1) nach Anspruch 11, **dadurch gekennzeichnet, dass** die Höhe der metallischen Hohlräume (373) geeignet ist, um die Erzeugnisse (14) in ihrer Verpackung (10) aus dem Heizraum (37) herauszulassen.

13. Anlage (1) nach einem der Ansprüche 9 bis 12, **dadurch gekennzeichnet, dass** der Heizraum (37) ferner Zuleitungen (3741, 3751) an seinem unteren Teil (374) und seinem oberen Teil (375) umfasst.

14. Anlage (1) nach einem der Ansprüche 9 bis 13, **dadurch gekennzeichnet, dass** die Mitnahmemittel (20B, 20C) Förderbänder umfassen, die folgendermaßen verteilt sind:
- ein erstes Band (20B), das den Heizraum (37) durchquert, um das Erzeugnis (14) in seiner Verpackung (10) auf einer Geschwindigkeit V₁ in dem Heizraum (37) bis zu dem Ausgang (372) des Raums (37) zu bringen, wobei die Geschwindigkeit V₁ des ersten Bandes (20B) zwischen 25 cm/min und 80 cm/min variiert, und
- ein zweites Band, das stromabwärts von dem Heizraum (37) angeordnet ist, um das Erzeugnis (14) in seiner Verpackung (10) aus dem Raum (37) herauszubringen und es auf einer Geschwindigkeit V₂ zu den ergänzenden Schließmitteln (40) zu bringen, wobei die Geschwindigkeit V₂ des zweiten Bandes (30C) zwischen 10 m/min und 30 m/min variiert.

15. Anlage (1) nach Anspruch 14, **dadurch gekennzeichnet, dass** die Geschwindigkeit V₁ des ersten Bandes (20B) ungefähr 36 cm/min beträgt und die Geschwindigkeit V₂ des zweiten Bandes (30C) etwa 21 m/min beträgt.

## Claims

1. Method for treating a consumable product (14), in particular a food product, said method comprising the following successive steps:
a) introduction of said product (14) into a package (10);
b) partial closure of the package, keeping at least one pressure control area (17A, 17B) on the surface of the package (10);
c) heating of the product (14) by microwaves in the partially closed package (10) to a temperature of between 95°C and 105°C, preferably around 95°C, said precooking (c) of the product (14) causing a release of vapour by the content of the package (10) that causes an overpressure inside said package (10);
d) total closure of the package (10) at the pressure control area (17A, 17B);
said method being **characterised in that** the steps (c) of heating of the product (14) by microwaves and (d) of total closure of the package (10) are performed continuously, and
**in that**:
--step c) of heating the product (14) by microwaves is coupled with the simultaneous heating of the package (10) at a temperature of between 60°C and 120°C;
--step d) of total closure of the package (10) is performed immediately after step c) of heating the product (14) while the temperature of said product (14) remains between 95°C and 105°C and that of the package (10) is still between 60°C and 120°C, with a slight overpressure present in the package (10).

2. Method according to claim 1, **characterised in that** step d) of total closure of the package (10) is performed less than 5 seconds after step c) of heating the product (14).

3. Method according to claim 1 or 2, **characterised in that** the pressure control area (17A, 17B) on the surface of the package (10) consists of a degassing chimney (17B).

4. Method according to any one of the preceding claims, **characterised in that** the overpressure in the package (10) during step d) of total closure of the package (10) is at least approximately 0.2 bar, preferably at least approximately 0.4 bar.

5. Method according to any one of the preceding claims, **characterised in that**, during step a) of introducing said product (14) into the package (10), an additional liquid (18), which is preferably present at the rate of 1 to 2 ml for 100 g of product, is also introduced.

6. Method according to claim 5, **characterised in that** the liquid (18) is mainly aqueous.

7. Method according to claim 6, **characterised in that** the liquid (18) comprises water and at least one additive.

8. Method according to any one of the preceding claims, **characterised in that** the package (10, 60) is a pouch (10) made from a film of composite or plastic material.

9. Production-line installation (1) for treating a consumable product (14), in particular a food product in a package (10), comprising the following stations:
- a heating station (36), which comprises a heating chamber (37) and a microwave generator (38),
- means (20A, 20B, 20C) for conveying the product (14) in its package (10), for transporting it in said installation (1), said conveying means (20A, 20B, 20C) comprising means of driving the product (20B, 20C) for transporting it through the heating chamber (37),
- partial-closure means (34A, 34B) able to partially close the package (10) while preserving at least one pressure control area (17A, 17B) on the surface of the package (10), said partial closure means (34A, 34B) being disposed upstream of the heating station (36), and
- complementary closure means (40) able to close said control area (17A, 17B), said complementary closure means (40) being disposed downstream of the heating station (36),
said installation (1) being **characterised in that**:
- the heating chamber (37) is an open tunnel with an entrance (371) and an exit (372), which are each provided with means (373) for trapping stray waves,
- the means (20B, 20C) for driving the product (14) through the heating chamber (37) comprise entrance drive means (20B) for bringing the product (14) into the heating chamber (37) as far as the exit (372) from the chamber from the chamber (37), and exit drive means (20C) for discharging the product (14) out of the heating chamber (37) and bringing it as far as the complementary closure means (40), and
- the heating station (36) comprises, apart from the microwave generator (38), specific means (39) for heating the package (10).

10. Installation (1) according to claim 9, **characterised in** the means (39) for heating the package (10) consists of a hot-air blowing device.

11. Installation (1) according to claim 9 or 10, **characterised in that** the wave trapping means (373) consist of continuous or discrete short-circuiting metal cavities that each frame the entrance and exit of the chamber.

12. Installation (1) according to claim 11, **characterised in that** the height of the metal cavities (373) is adapted to allow the products (14) to leave the heating chamber (37) in their package (10).

13. Installation (1) according to any one of claims 9 to 12, **characterised in that** the heating chamber (37) further comprises entries (3741, 3751) on its bottom part (374) and its top part (375).

14. Installation (1) according to any one of claims 9 to 13, **characterised in that** the drive means (20B, 20C) comprise conveyor belts, which are distributed as follows:
- a first belt (20B) passing through the heating chamber (37) in order to bring the product (14), at a speed V₁, in its package (10) into said heating chamber (37) as far as the exit (372) from said chamber (37), the speed V₁ of said first belt (20B) varying between 25 cm/min and 80 cm/min, and
- a second belt disposed downstream of the heating chamber (37) in order to bring the product (14) in its package (10) out of the heating chamber (37) and bring it at a speed V₂ to the complementary closure means (40), the speed V₂ of said second belt (30C) varying between 10 m/min and 30 m/min.

15. Installation (1) according to claim 14, **characterised in that** the speed V₁ of said first belt (20B) is around 36 cm/min, and the speed V₂ of said second belt (30C) is around 21 m/min.
